# EUROPEAN PATENT APPLICATION

(11) **EP 0 657 478 A2**
(43) Date of publication of application: **14.06.1995**
(21) Application number: 94119536.4
(22) Date of filing: 09.12.1994
(51) Int. Cl.: C08F 220/56, C08F 220/34, C08F 220/60

(54) **An improved process for the preparation of water soluble polymer dispersion**

(30) Priority: 09.12.1993 US 163779
(71) Applicant: NALCO CHEMICAL COMPANY, Naperville Illinois 60563-1198 (US)
(72) Inventor: Werges, Darrell L., Naperville, IL 60565 (US); Ramesh, Manian, Naperville, IL 60565 (US)
(74) Representative: Ruschke, Olaf

(57) **Abstract**

The present invention is particularly useful in preparing a water soluble polymer dispersion. According to one preferred embodiment of the invention, the dispersion is prepared by polymerizing a water soluble mixture of from about 15 to about 30% percent by weight of a cationic monomer represented by the following general formula (I): 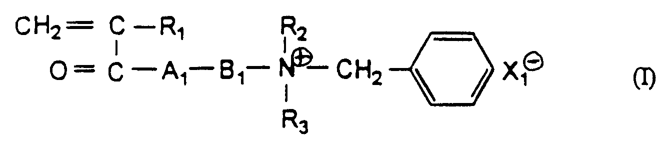
where R₁ is either hydrogen or CH₃; R₂ and R₃ are each an alkyl group having 1 to 3 carbon atoms; A₁ is either an oxygen atom or NH; B₁ is either an alkylene group having 2 to 4 carbon atoms or a hydroxypropylene group, and X₁^{⊖} is an anionic counterion, and/or a second cationic monomer represented by the following general formula (II): 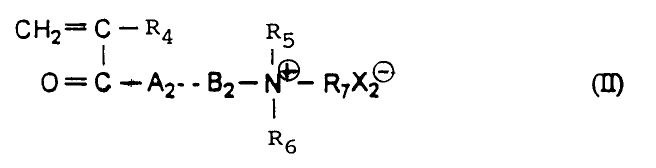
where R₄ is either hydrogen or CH₃; R₅ and R₆ are each an alkyl group having 1 to 2 carbon atoms; R₇ is a hydrogen atom or an alkyl group having 1 to 2 carbon atoms; A₂ is either an oxygen atom or NH; B₂ is either an alkylene group having 2 to 4 carbon atoms or a hydroxypropylene group and X₂^{⊖} is an anionic counterion; and (meth)acrylamide in an aqueous solution of from 17 to about 19 percent by weight of a polyvalent anionic salt.

## Description

### Field of the Invention

The present invention relates to the novel process for the production of a dispersion of a water soluble polymer.

### Background of the Invention

Conventional processes for the preparation of a water soluble cationic polymer useful as a flocculant include polymerization in an aqueous solution, water-in-oil emulsion polymerization, and suspension polymerization in a hydrophobic solvent. U.S. Patent No. 4,929,655 (Takeda et al.), which issued on May 29, 1990, and which is incorporated herein by reference, provided a novel process for preparing a water soluble polymer dispersion which overcomes the many disadvantages of the stationary polymerization, water-in-oil type emulsion polymerization and suspension polymerization processes. This process for the production of a water soluble dispersion includes the polymerization of water soluble monomers of 5 to 100 mole % of a cationic monomer represented by the following formula (I), 0 to 50 mole % of another cationic monomer represented by the following formula (II) and 0 to 95 mole % (meth)acrylamide in the presence of 1 to 10% by weight of an organic high molecular multivalent cation comprising a water soluble polymer containing at least a monomer of formula (II) (i.e., a hydrophilic monomer), based on the total weight of the monomers, in an aqueous multivalent anionic salt solution having a concentration of 15% by weight or more: 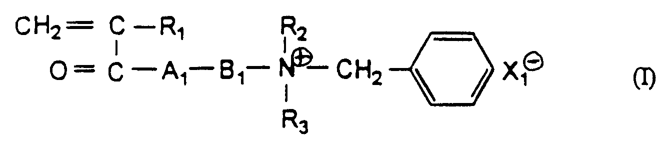
where R₁ is either hydrogen or CH₃; R₂ and R₃ are each an alkyl group having 1 to 3 carbon atoms; A₁ is either an oxygen atom or NH; B₁ is either an alkylene group having 2 to 4 carbon atoms or a hydroxypropylene group, and X₁^{⊖} is an anionic counterion, and/or a second cationic monomer represented by the following general formula (II): 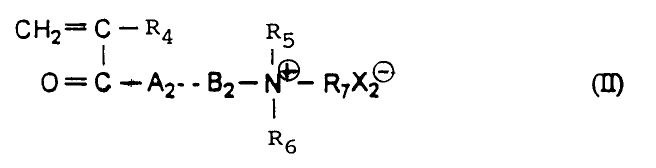
where R₄ is either hydrogen or CH₃; R₅ and R₆ are each an alkyl group having 1 to 2 carbon atoms; R₇ is a hydrogen atom or an alkyl group having 1 to 2 carbon atoms; A₂ is either an oxygen atom or NH; B₂ is either an alkylene group having 2 to 4 carbon atoms or a hydroxypropylene group and X₂^{⊖} is an anionic counterion.

U.S. Patent No. 5,006,590 (Takeda et al.), which issued on April 9, 1991, and which is Incorporated herein by reference, is similar to Takeda '655, except that polymerization is carried out in the presence of both: (1) a water soluble cationic polymer which is insoluble in an aqueous solution of a polyvalent anionic salt (seed polymer); and (2) a water soluble cationic polymer which is soluble in an aqueous solution of a polyvalent anionic salt (dispersant polymer). The water soluble cationic polymer that is insoluble in the aqueous solution of polyvalent anionic salt contains at least 5 mole % of cationic monomer units represented by the aforementioned general formula (I) above and the water soluble cationic polymer that is soluble In the aqueous solution of a polyvalent anionic salt contains at least 20 mole % of cationic monomer units represented by the general formula (II) above.

Although the final polymer dispersion viscosities were satisfactory, i.e., 1,000 cp or below, the processes disclosed in U.S. patent Nos. 4,929,655 and 5,006,590 proceed through very high process viscosities (i.e., > 100,000 cp and as high as 2,000,000 cp), which require the use of a custom built high viscosity polymerization reactor. Due to these high process viscosities, the methods disclosed in U.S. Patent Nos. 4,929,655 and 5,006,590 can only be used in the synthesis of polymer systems containing low polymer contents (i.e., 15 to 20%).

The present inventors have discovered through extensive experimentation, the multivalent anionic salt concentration can be optimized to control process viscosity. This optimization of the multivalent anionic concentration has been demonstrated to control the particle size as well as facilitate the precipitation process by very significantly reducing the process viscosity. This allows the production of high molecular weight polymer dispersions in a low viscosity reactor, thereby avoiding the substantial costs associated with high viscosity custom built polymerization reactors. Further, the reduction In process viscosity will allow the preparation of polymer systems containing higher actives (such as, from 15 to about 30 percent by weight or above) in high viscosity latex-type reactors. It should be noted that it has been determined that multivalent salt concentrations outside of the range of the instant invention produces process viscosity which are so great that standard low viscosity reactors will not accommodate the process. The present Invention provides many additional advantages which shall become apparent as described below.

### Summary of the Invention

The present invention is particularly useful in preparing a water soluble polymer dispersion. According to one preferred embodiment of the invention, the dispersion is prepared by polymerizing a water soluble mixture of from about 15 to about 30% percent by weight of a cationic monomer represented by the following general formula (I): 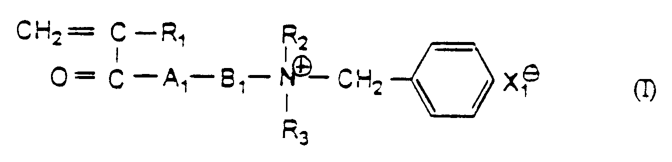
where R₁ is either hydrogen or CH₃; R₂ and R₃ are each an alkyl group having 1 to 3 carbon atoms; A₁ is either an oxygen atom or NH; B₁ is either an alkylene group having 2 to 4 carbon atoms or a hydroxypropylene group, and X₁^{⊖} is an anionic counterion, and/or a second cationic monomer represented by the following general formula (II): 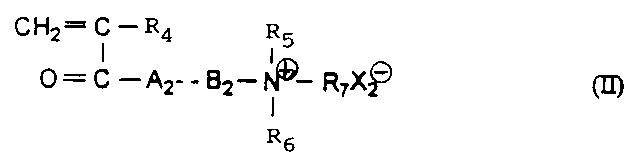
where R₄ is either hydrogen or CH₃; R₅ and R₆ are each an alkyl group having 1 to 2 carbon atoms; R₇ is a hydrogen atom or an alkyl group having 1 to 2 carbon atoms; A₂ is either an oxygen atom or NH; B₂ is either an alkylene group having 2 to 4 carbon atoms or a hydroxypropylene group and X₂^{⊖} is an anionic counterion, and (meth)acrylamide in an aqueous solution of from 17 to about 19 percent by weight of a polyvalent anionic salt.

### Other advantages and features of the present invention will be understood by reference to the following specification.

### Description of the Preferred Embodiments

The present invention is particularly useful in processes for preparing a water soluble polymer dispersion. The dispersion is prepared by polymerizing a water soluble mixture of a cationic monomer represented by the following general formula (I): 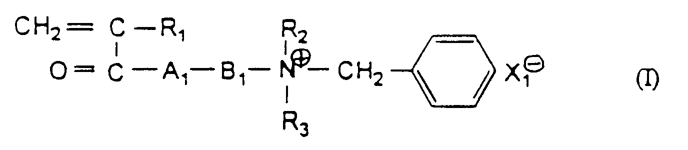
where R₁ is either hydrogen or CH₃; R₂ and R₃ are each an alkyl group having 1 to 3 carbon atoms; A₁ is either an oxygen atom or NH; B₁ is either an alkylene group having 2 to 4 carbon atoms or a hydroxypropylene group, and X₁^{⊖} is an anionic counterion, and/or a second cationic monomer represented by the following general formula (II): 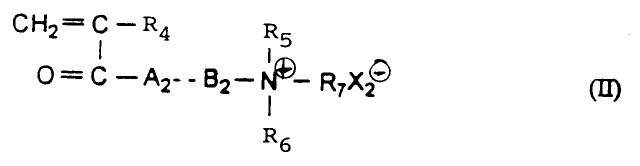
where R₄ is either hydrogen or CH₃; R₅ and R₆ are each an alkyl group having 1 to 2 carbon atoms; R₇ is a hydrogen atom or an alkyl group having 1 to 2 carbon atoms; A₂ is either an oxygen atom or NH; B₂ is either an alkylene group having 2 to 4 carbon atoms or a hydroxypropylene group and X₂^{⊖} is an anionic counterion , and (meth)acrylamide in an aqueous solution of from about 17 to about 19 percent by weight of a polyvalent anion salt.

The (meth)acrylamide is typically present in an amount in the range between about 20 to about 95 mole %, the cationic monomer represented by the general formula (I) is typically present in an amount between about 5 to about 50 mole %; and the cationic monomer represented by the general formula (II) is typically present in an amount between about 5 to about 50 mole %. The use of the cationic monomer represented by the general formula (II) is optional. The dispersant system of the invention is present in an amount between about 2.5 to about 6 weight %, based on the total weight of the monomers of the dispersion.

Examples of monomers represented by the general formula (I) include quaternary monomers obtained by treating dimethylaminoethyl (meth)acrylate, diethylaminoethyl (meth)acrylate, dimethylaminopropyl (meth)acrylamide and dimethylhydroxypropyl (meth)acrylate, diethylaminopropyl (meth)acrylamide and dimethylaminohydroxylpropyl (meth)acrylate with benzyl chloride. One preferred monomer is N-benzyl-N-(meth)acryloxyethyl-N,N-dimethylammonium chloride.

Examples of monomers represented by the general formula (II) include salts such as dimethylaminoethyl (meth)acrylate, diethylaminoethyl (meth)acrylate, dimethylaminopropyl (meth)acrylamide, diethylaminopropyl (methyl)acrylamide and dimethylhydroxypropyl (meth)acrylate, and methylated and ethylated quaternary salts. One preferred monomer is N-(meth)acryloyloxyethyl-N,N,N-trimethyl ammonium chloride.

The polymer initiator is selected from the group consisting of 2,2'-azobis(2-amidinopropane) hydrochloride (V50), ammonium persulfate, 2,2'-azobis (N,N'-dimethylene isobutyramidine) dihydrochloride (VA044), and ammonium persulfate/sodium meta bisulfite.

The inventors have discovered that process viscosities can be carefully controlled by controlling the concentration of the multivalent anionic salt used to deposit the polymer of the present invention. The multivalent anionic salt in the present invention is preferably a sulfate or a phosphate, and typical examples of these salts include ammonium sulfate, sodium sulfate, magnesium sulfate, aluminum sulfate, ammonium hydrogenphosphate, sodium hydrogenphosphate and potassium hydrogenphosphate. According to one preferred embodiment of the invention, the salt is used in the form an aqueous salt solution at a concentration of from about 17 to about 19 by weight, more preferably 17.0 to about 17.50 percent by weight and most preferably, about 17.20 percent by weight.

By controlling the concentration of the multivalent anionic salt permits the use of conventional latex reactors since the process viscosity during polymerization is maintained below about 25,000 cp, more preferably below about 15,000 cp and most preferably about 5,000 cp. The present inventions have determined that an aqueous salt concentration during the polymerization, of more than 19 percent by weight or less than 17 percent by weight produces process viscosities which are too great for low viscosity reactors to handle.

The following examples are presented to describe preferred embodiments and utilities of the invention and are not meant to limit the invention unless otherwise stated In the claims appended hereto.

### Example 1

The following formulas were prepared using the below described procedure. The process viscosities were determined and recorded in Table I. below.

### Formula A

16.44 % by weight multivalent anionic salt during polymerization

| Ingredient | % Weight |
|---|---|
| Monomer Solution | |
| D. I. Water | 40.399 |
| Ammonium Sulfate | 15.126 |
| PolyDMAEA-MCQ | 4.940 |
| Glycerine | 0.593 |
| Acrylamide (48.0%) | 14.455 |
| DMAEA-BCQ (80%) | 12.680 |
| DMAEA-MCQ (79.3%) | 3.676 |
| Benzyl Alcohol | 0.004 |
| Versene | 0.030 |

| Initiator Solution | |
|---|---|
| V-50 | 0.004 |

| Post Reaction Additions | |
|---|---|
| Ammonium Sulfate | 7.005 |
| Acetic Acid | 0.988 |
| Ammonium Thiocyanate | 0.100 |

### Formula B

17.2% by weight multivalent anionic salt during polymerization

| Ingredient | % Weight |
|---|---|
| Monomer Solution | |
| D. I. Water | 40.225 |
| Ammonium Sulfate | 16.000 |
| PolyDMAEA - MCQ | 4.930 |
| Glycerine | 0.900 |
| Acrylamide (48%) | 14.455 |
| DMAEA-BCQ-80% | 12.680 |
| DMAEA - MCQ (79.3) | 3.676 |
| Versene | 0.030 |

| Initiator Solution | |
|---|---|
| V-50 | 0.002 + 0.002 |

| Post Reaction Additions | |
|---|---|
| Ammonium Sulfate | 6.000 |
| Ammonium Thiocyanate | 0.100 |
| Acetic Acid | 1.000 |

### Formula C

18.64% by weight multivalent anionic salt during polymerization

| Ingredient | % Weight |
|---|---|
| Monomer Solution | |
| D. I. Water | 43.389 |
| PolyDMAEA - MCQ | 5.000 |
| Ammonium Sulfate | 18.268 |
| Ethylene Glycol | 0.500 |
| Acrylamide (48.%) | 14.455 |
| Adipic Acid | 1.000 |
| DMAEA-BCQ (80%) | 12.678 |
| DMAEA - MCQ (79.3%) | 3.676 |
| Versene | 0.030 |

| Initiator Solution | |
|---|---|
| V-50 | 0.004 |

| Post Reaction Additions | |
|---|---|
| Ammonium Sulfate | 2.000 |

### Formula D

19.19% by weight multivalent anionic salt during polymerization

| Ingredient | % Weight |
|---|---|
| Monomer Solution | |
| D. I. Water | 44.807 |
| Ammonium Sulfate | 19.000 |
| PolyDMAEA - MCQ (25%) | 3.750 |
| Ethylene Glycol or glycerine | 0.500 |
| Acrylamide (48%) | 14.455 |
| DMAEA-BCQ (80%) | 12.678 |
| DMAEA - MCQ (79.3%) | 3.676 |
| Versene | 0.030 |

| Initiator Solution | |
|---|---|
| V-50 | 0.004 |

| Post Reaction Addition | |
|---|---|
| Acetic Acid | 1.000 |
| Ammonium Thiocyanate | 0.100 |

The monomer mixture, water, ammonium sulfate, benzyl alcohol and versene are added in a batch reactor. The contents were heated to 48°C and, thereafter, nitrogen purged. Polymerization initiator, V-50, was added to the batch reactor. After the addition, the reactants were held in the reactor for four hours at 48°C. The reaction products were cooled to room temperature and post reaction addition of ammonium salt were added to prevent polymer degradation and, optionally, acetic acid and ammonium thiocyanate.

Referring to Table I:

**TABLE I**

| | % Salt | Highest Measured Process Viscosity (CP) |
|---|---|---|
| A | 16.44 | Greater than 2,000,000 |
| B | 17.2 | 5,200 |
| C | 18.64 | 7,500 |
| D | 19.19 | 14,000 |

As shown in Table I above, by maintaining the multivalent anionic salt in a concentration of from between about 17% to about 19% by weight, maximum process viscosity can be maintained substantially below 20,000 cp. Specifically, Formulations B, C and D of the invention, were able to maintain highest measured process viscosity at 5,200, 7,500 and 14,000 cp respectively. This would allow latex-type reactors to be used in the synthesis of the water dispersion polymers of the invention.

Changes can be made in the composition, operation and arrangement of the method of the present invention described herein without departing from the concept and scope of the invention as defined in the following claims:

## Claims

1. A process for preparing a water soluble polymer dispersion which comprises polymerizing a water soluble mixture which comprises:
a.) A cationic monomer represented by the following general formula (I): 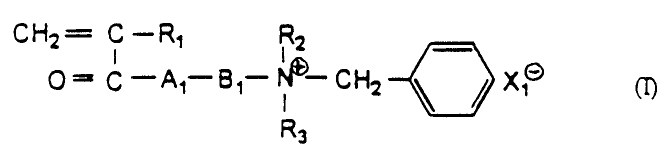
wherein R₁ is either hydrogen or CH₃; R₂ and R₃ are each an alkyl group having 1 to 3 carbon atoms: A₁ is either an oxygen atom or NH; B₁ is either an alkylene group having 2 to 4 carbon atoms or a hydroxypropylene group, and X₁^{⊖} is an anionic counterion, and/or a second cationic monomer represented by the following general formula (II): 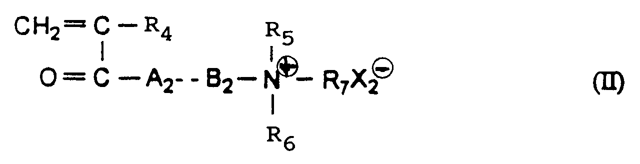 where R₄ is either hydrogen or CH₃; R₅ and R₆ are each an alkyl group having 1 to 2 carbon atoms; R₇ is a hydrogen atom or an alkyl group having 1 to 2 carbon atoms; A₂ is either an oxygen atom or NH; B₂ is either an alkylene group having 2 to 4 carbon atoms or a hydroxypropylene group and X₂^{⊖} is an anionic counterion; and
b.) (meth)acrylamide in an aqueous solution of from 17 to about 19 percent by weight of a polyvalent anionic salt.

2. The process according to Claim 1 wherein said (meth)acrylamide is present in an amount in the range between about 20 to about 95 mole %.

3. The process according to Claim 1 wherein said cationic monomer represented by the general formula (I) is present in an amount between about 5 to about 50 mole %.

4. The process according to Claim 1 wherein said cationic monomer represented by the general formula (II) is present in an amount between about 5 to about 50 mole %.

5. The process according to any of claims 1 to 4 wherein said multivalent anionic salt is at least one multivalent anionic salt selected from the group consisting of ammonium sulfate, sodium sulfate, magnesium sulfate, aluminum sulfate, ammonium hydrogen phosphate, sodium hydrogenphosphate and potassium hydrogenphosphate.

6. The process according to any of claims 1 to 5 wherein monomers represented by the general formula (I) are selected from the group consisting of: quaternary monomers obtained by treating dimethylaminoethyl (meth)acrylate, diethylaminoethyl (meth)acrylate, dimethylaminopropyl (meth)acrylamide and dimethylhydroxypropyl (meth)acrylate, diethylaminopropyl (meth)acrylamide and dimethylaminohydroxylpropyl (meth)acrylate with benzyl chloride.

7. The process according to any of claims 1 to 6 wherein monomers represented by the general formula (II) are selected from the group consisting of: dimethylaminoethyl (meth)acrylate, diethylaminoethyl (meth)acrylate, dimethylaminopropyl (meth)acrylamide, diethylaminopropyl (meth)acrylamide and dimethylhydroxypropyl (meth)acrylate, and methylated and ethylated quaternary.

8. The process according to any of claims 1 to 7 wherein the highest process viscosity during polymerization is less than about 20,000 cp or lower.

9. The process of any of claims 1 to 8 wherein the aqueous solution of the polyvalent anionic salt includes from about 17.0 to about 18.0 percent by weight of the polyvalent anionic salt.

10. The process of any of claims 1 to 9 wherein the aqueous solution of the polyvalent anionic salt includes from about 17.0 to about 17.50 percent by weight of the polyvalent anionic salt.
